# EUROPÄISCHE PATENTSCHRIFT

(11) **EP 1 002 932 B1**
(45) Veröffentlichungstag und Bekanntmachung des Hinweises auf die Patenterteilung: **29.09.2004**
(21) Anmeldenummer: 99122060.9
(22) Anmeldetag: 17.11.1999
(51) Int. Cl.: E21B 7/28, E21B 7/18, E21B 31/03, E21B 21/00, E21B 7/30, E21B 7/20

(54) **Verfahren und Vorrichtung zum grabenlosen Rohrleitungsaustausch**
Process and device for trenchless replacement of conduits
Procédé et dispositif pour le remplacement de conduites sans excavation

(30) Priorität: 18.11.1998 DE 19853198
(43) Veröffentlichungstag der Anmeldung: 24.05.2000
(73) Patentinhaber: FlowTex Technologie GmbH & Co. KG, 76275 Ettlingen (DE)
(72) Erfinder: Hüttig, Manfred, Dipl.-Geophys., 99510 Ossmannstedt (DE); Schachtschabel, Maik, 99444 Blankenhain (DE)
(74) Vertreter: HOFFMANN - EITLE

(56) Entgegenhaltungen:
- WO-A-96/02012
- DE-A- 2 461 476
- DE-A- 19 711 190
- DE-C- 19 504 484
- GB-A- 2 103 888
- US-A- 5 322 134

## Beschreibung

Die Erfindung betrifft ein Verfahren zum grabenlosen Rohrleitungsaustausch.

Der Austausch erdverlegter Rohrleitungen ist immer dann notwendig, wenn bestehende Versorgungsleitungen zu sanieren sind oder aber auch die Verlegung von neuen Rohrleitungen mit einem größeren Nutzungsquerschnitt erforderlich ist. Normalerweise ist der Untergrund von Versorgungsbereichen dicht mit Versorgungsleitungen belegt. Daher kann der Austausch einer Rohrleitung in der üblichen offenen Bauweise, d.h. mit Hilfe eines Grabens, große Schwierigkeiten bereiten. Zudem ist die offene Bauweise mit sehr hohen Kosten verbunden.

### Stand der Technik

Innerhalb von versiegelten Bereichen, unter Verkehrsflächen, im Grundwasser und im Falle von übertief verlegten Versorgungsleitungen findet die Rohrauswechslung in geschlossener Bauweise statt. Hierbei wird keine Aufgrabung vorgenommen, sondern das bestehende Rohr mit Hilfe von zerstörenden oder verdrängenden Verfahren aus der Bohrung beseitigt. Derartige Verfahren sind in der Technik als Berstlining-Verfahren wie auch Hydrosverfahren bekannt. Die verbleibenden Materialreste der alten Rohrleitungen im Erdreich können jedoch erhebliche Probleme bereiten. Bei der Anwendung zerstörender Verfahren bleiben scharfkantige Fragmente der ursprünglich verlegten Rohrleitung im Erdreich zurück und können eine neu zu verlegende Leitung beschädigen, z.B. aufschlitzen. Daher ist bei der Verwendung zerstörender Verfahren insbesondere bei der Neuverlegung von Gasleitungen größte Vorsicht geboten.

Bei dem Herausziehen einer alten Rohrleitung müssen erhebliche Zugkräfte aufgewandt werden, um die Mantelreibung der alten Rohrleitung zu überwinden. Dies bedingt, daß die zu sanierende Abschnittslänge unter Beachtung des Rohrdurchmessers und umgebenden Bodengefüges relativ gering ist, da ansonsten Reibungskräfte auftreten, die mit herkömmlichen Vorrichtungen nicht mehr überwunden werden können. Eine Verringerung der zu sanierenden Abschnittslänge bereitet jedoch bei schwer zugänglichen Leitungen innerhalb von versiegelten Bereichen oder bei einer sehr tiefen Verlegung große Schwierigkeiten, weil der zu sanierende Abschnitt zwischen einer Start- und Zielgrube liegt und bei einer geringeren Abschnittlänge sehr viel höhere Kosten für das Erstellen von Start- und zielgruben anfällt. In manchen Bereichen lassen sich die zu sanierenden Abschnitte nicht beliebig verringern, da die Bebauung eines Bereichs oder aber auch die verkehrstechnische Nutzung eines Bereichs eine gewisse Mindestabschnittslänge zwingend erfordern.

Des weiteren sind bei den in der Technik bekannten zerstörenden oder verdrängenden Verfahren Durchmessererweiterungen der neu einzuziehenden Rohrleitung nicht möglich. Im deutschen Patent 195 04 484 wird ein spezieller Überwaschkopf beschrieben, der ringförmig ausgestaltet ist und über eine Leitung, insbesondere ein Elektrokabel, geschoben werden kann. Aus dem Überwaschkopf tritt an mehreren am Umfang verteilten Düsen eine Flüssigkeit auf, die den Bodenbereich, der die Versorgungsleitung umgibt, gleitfähiger gestaltet und somit das Herausziehen der Leitung über einen größeren Streckenabschnitt gestattet.

Allerdings sind viele erdverlegte Leitungen aus einzelnen Rohrleitungsabschnitten aufgebaut, die mit Muffen miteinander verbunden sind. Auch Elektrokabel weisen häufig defekte Abschnitte auf, die in unregelmäßigen Abständen mit Elektromuffen ausgebessert sind. Im Bereich von Elektromuffen besitzen Elektrokabel etwa einen zweifachen Durchmesser. In all diesen Bereichen ist das Überwaschen mit einem ringförmigen Überwaschkopf nicht möglich, so daß in diesen Bereichen bislang wieder auf eine der herkömmlichen Techniken zurückgegriffen werden mußte.

Die WO 96/02012 betrifft ein Verfahren zur Leitungsverlegung, bei dem ein Bohrkopf entlang eines bereits vorhandenen Verlegepfads eines Kabels oder einer Leitung geführt wird und über einen Spülkopf Wasser oder eine andere Benetzungsflüssigkeit ausstößt und so bis zu einem Zielpunkt vorangetrieben wird. Abschließend wird eine optische Faser in die bestehende Bohrung eingeschoben.

Die DE 197 11 190 A1 betrifft ebenfalls ein Spülbohrverfahren zum unterirdischen Verlegen von Rohren, bei dem in gewohnter Weise eine Bohrflüssigkeit, z.B. Wasster-Bentonit-Emulsion, unter Druck durch das Bohrgestänge zu einem Aufweitkopf gefördert und dort durch Düsen austritt, um das Erdreich wegzuspülen und das Bohrgestänge und das einzuziehende Rohr einseitig schmierend zu umschließen. Ein Leitungsaustausch ist in dieser Druckschrift nicht beschrieben.

Aus der US 5,322,134 sind die Prinzipien der verlaufsgesteuerten Bohrtechnik bekannt. Hierin wird ein Bohrkopf beschrieben für eine verlaufsgesteuerte Bohrvorrichtung, die sich zwischen einer Startgrube und einer Zielgrube erstreckt.

Die DE 24 61 476 A1 betrifft ein Verfahren, um ineinander übergehende Bohrungen zu erstellen. Auf diese Weise werden parallel zueinander verlaufende Bohrungen erstellt, bei denen durch spezielle Maßnahmen eine Ablenkung der einzelnen Bohrungen von ihrem parallelen Pfad verhindert werden soll.

Die GB 2 103 888 beschreibt eine Vorrichtung, mit der im Boden verlegte Kabel ersetzt werden. Dazu wird das Erdreich um und entlang des bestehenden Kabels geräumt und verdichtet. Die beschriebene Vorrichtung umgreift das bestehende Kabel und setzt Düsen ein, um das Gefüge um das Kabel herum zu durchnässen. Die Vorrichtung zieht sich dabei entlang des vorhandenen Erdkabels voran und zieht dabei die neu einzuziehende Leitung ein. Die GB 2 103 888 A stellt den nächstkommenden Stand der Technik dar.

### Gegenstand der Erfindung

Der Erfindung liegt die Aufgabe zugrunde, ein Verfahren zur Auswechslung erdverlegter Rohrleitungen vorzuschlagen, die auch bei Leitungen mit variierendem Durchmesser anwendbar ist und zudem eine optionale Aufweitung auf größere Leitungsquerschnitte ermöglicht.

Die Aufgabe der Erfindung wird durch ein Verfahren mit den Merkmalen des Anspruchs 1 gelöst.

Das Verfahren läuft für jede zu sanierende Abschnittslänge zwischen einer Startgrube und einer Zielgrube mit den folgenden Schritten ab:

Zuerst werden mehrere verlaufsgesteuerte Bohrungen entlang und nahe des Umfangs der auszutauschenden Leitung von der Startgrube zur Zielgrube vorangetrieben. Nach dem drehstarren Anbringen eines Spülkopfes am Bohrgestänge in der Zielgrube wird der Spülkopf unter gleichzeitigem Austritt von Spülflüssigkeit von der Zielgrube bis zur Startgrube mit dem Bohrgestänge zurückgezogen. Anschließend wird die auszutauschende Leitung aus dem durch Spülflüssigkeit gleitfähig gemachten Erdkanal herausgezogen und dieser mit einem Stabilisiermittel verfüllt. Abschließend wird eine neue Leitung eingezogen.

Ein Spülkopf, mit dem das erfindungsgemäße Verfahren durchgeführt werden kann, umfaßt eine Anbringeinrichtung zur drehstarren Befestigung des Spülkopfes an einem Bohrgestänge, das eine Zugrichtung in Längsrichtung des Bohrgestänges definiert sowie mehrere Austrittsdüsen für Spülflüssigkeit am Spülkopf. Je nach dem Durchmesser der auszutauschenden Leitung besitzt der Spülkopf eine im wesentlichen einem Kreissegment entsprechende Querschnittsform senkrecht zur Zugrichtung oder aber ist der Spülkopf im wesentlichen zylinderförmig ausgebildet mit der Längsachse des Zylinders in Zugrichtung. Die zweitgenannte Form eignet sich vor allen Dingen für Leitungen, insbesondere Rohrleitungen, mit einem sehr großen Durchmesser und folglich einer sehr geringen Krümmung der Leitungsoberfläche, während der Spülkopf mit einer einem Kreissegment entsprechenden Querschnittsform für Leitungen mit geringerem Durchmesser bevorzugt wird.

Bevorzugte Ausführungsformen sind durch die übrigen Ansprüche gekennzeichnet.

Nach einer bevorzugten Ausführungsform des erfindungsgemäßen Verfahrens umfaßt dieses während des Einziehens einer neuen Leitung das Verfüllen des Ringraumes zwischen der neuen Leitung und dem Erdkanal mit Verdämmittel, vorzugsweise Bentonitsuspension. Hierdurch tritt ein Verdämmen der neu einzuziehenden Leitung auf; Belastungen im Boden werden gleichmäßig auf die Leitung übertragen und ein mögliches zukünftiges Austauschen der Leitung wird durch die tixotropen Eigenschaften der Bentonitsuspension erleichtert.

Vorzugsweise umfaßt das Verfahren weiterhin nach dem Herausziehen der auszutauschenden Leitung aus dem Erdkanal eine Erweiterung des Erdkanals durch das Hindurchziehen einer Aufweiteinrichtung durch den Erdkanal. Das Bohrgestänge der zur Verwendung gelangenden Vorrichtung kann hierzu mit einem kegelförmig ausgebildeten Aufweitkopf oder anderen in der Technik bekannten Aufweiteinrichtungen verbunden werden, wodurch während des Hindurchziehens dieser Aufweiteinrichtung durch den Erdkanal der Durchmesser auf ein gewünschtes Maß vergrößert wird. Dieses Verfahren kommt immer dann zum Einsatz, wenn die neu zu verlegende Leitung bei denselben Innenabmessungen entweder eine höhere Wanddicke aufweist oder aber die zu sanierende Leitung durch eine neue Leitung mit größerem Durchmesser ausgewechselt werden soll.

Vorzugsweise ist das Verfahren dadurch gekennzeichnet, daß das Zurückziehen der auszutauschenden Leitung unter Nutzung der Zugeinrichtung des Horizontalspülbohrgeräts erfolgt. Hierdurch können sehr hohe Zugkräfte aufgebracht werden, wodurch sich die in einem Abschnitt zu sanierende Länge weiter erhöhen läßt.

Vorzugsweise besitzt das Stabilisiermittel tixotrope Eigenschaften. Mittel mit tixotropen Eigenschaften dienen dazu, eine verfestigende Wirkung zu zeigen, wenn keine Scherbelastung vorliegt und dienen als Gleitmittel, sobald diese einer Belastung unterworfen werden. Vorzugsweise wird Bentonitsuspension als Stabilisiermittel eingesetzt. Der Vorteil eines derartigen Stabilisiermittels liegt darin, daß im unbelasteten Zustand die Wandungen des Erdkanals gefestigt werden und gleichzeitig das Einziehen einer neuen Leitung unterstützt wird.

Nach einer bevorzugten Ausführungsform ist die Spülflüssigkeit Bentonitsuspension, vorzugsweise unter Zumischung von Additiven. Auch für die Spülflüssigkeit gelten die oben genannten Vorteile eines tixotropen Stoffes. Während des Austritts aus den Injektionsdüsen unter hohem Druck ist die Bentonitsuspension niedrigviskos, während sie sich anschließend im porösen Erdreich verfestigt und daher im unmittelbaren Bereich verbleibt, der die auszutauschende Leitung umgibt. Ein zu dünnflüssiger Stoff besäße den Nachteil, daß zwar der Austritt aus den Injektionsdüsen leicht erfolgt, der Stoff aber zu leicht im porösen Erdreich in umgebende oder tiefer liegende Bodenschichten abläuft und für das anschließende Herausziehen der Rohrleitung nicht mehr als Schmiermittel zur Verfügung steht. Die zuzugebenden Additive sind vorzugsweise Stoffe, die in Bentonitsuspension mischbar sind und als Gleitmittel wirken.

Nach einer bevorzugten Ausführungsform der Erfindung tritt die Spülflüssigkeit mit zwischen 10 bar und 3.000 bar aus dem Spülkopf aus. Der zu wählende Druck richtet sich nach dem Durchmesser der auszutauschenden Leitung, den physikalischen Eigenschaften der eingesetzten Spülflüssigkeit, aber auch den geologischen Gegebenheiten, insbesondere der Gefügestruktur des umgebenden Bodens.

Die Anbringeeinrichtung des Spülbohrkopfes stellt eine Strömungsverbindung zwischen einem daran befestigten Bohrgestänge und einem inneren Hohlraum des Spülkopfes her. Hierdurch läßt sich im Betrieb die Spülflüssigkeit durch das Bohrgestänge zum Spülkopf fördern und tritt aus den Austrittsdüsen am Spülkopf aus.

Nach einer weiteren bevorzugten Ausführungsform des erfindungsgemäßen Verfahrens weist der verwendete Spülkopf eine Aufgleitflanke auf, die in Zugrichtung vorne angeordnet ist. Die Aufgleitflanke dient dazu, beim Hindurchziehen des Spülkopfes durch den Bodenbereich, der die Leitung umgibt, sicherzustellen, daß sich der Spülkopf nicht an örtlichen Verdickungen der Leitung, wie Muffen, festhakt, sondern beim Vorliegen von Widerständen an diesen entlang aufgleitet und sich somit störungsfrei durch das Erdreich ziehen läßt.

Bei der Verwendung des Spülkopfes, der im wesentlichen zylinderförmig ausgebildet ist und dessen Längsachse in Zugrichtung verläuft, sind die Austrittsdüsen vorzugsweise so im Zylindermantel des Spülbohrkopfes angeordnet, daß die Austrittsrichtungen der Austrittsdüsen sich in der Längsachse des Spülkopfes in einem Winkel schneiden, der zwischen 90° und 180° beträgt. Diese Winkelanordnung ermöglicht es, der Krümmung der auszutauschenden Leitung Rechnung zu tragen und, je nach Durchmesser der auszutauschenden Leitung, die Austrittsrichtung der Austrittsdüsen tangential an der gekrümmten Oberfläche der auszutauschenden Leitung entlangzurichten.

### Kurze Beschreibung der Zeichnungen

Nachfolgend wird die Erfindung rein beispielhaft anhand der beigefügten Figuren beschrieben, in denen:
- Fig. 1: eine schematische Schnittansicht senkrecht zur Längsachse einer auszuwechselnden Rohrleitung ist, in welcher der Verlauf von vier Spülbohrungen dargestellt ist;
- Fig. 2: eine schematische Ansicht entgegengesetzt zur Zugrichtung einer ersten Form des Spülkopfes ist;
- Fig. 3: eine Seitenansicht des in Fig. 2 dargestellten Spülkopfes darstellt;
- Fig. 4: eine Schnittansicht des in Fig. 2 dargestellten Spülkopfes entlang der Linien 4-4 ist;
- Fig. 5: eine zweite Form eines Spülkopfes darstellt;
- Fig. 6: eine Schnittansicht senkrecht zur Längserstreckung des in Fig. 5 dargestellten Spülkopfes zeigt; und
- Fig. 7 bis 10: die Verfahrensabfolge des erfindungsgemäßen Verfahrens schematisch verdeutlichen.

### Wege zur Ausführung der Erfindung

Die Erfindung dient dazu, erdverlegte Rohrleitungen aufgrabefrei auswechseln zu können. Gleichzeitig soll die Neuverlegung einer anderen Rohrleitung, die optional auch einen größeren Durchmesser besitzen kann, möglich sein.

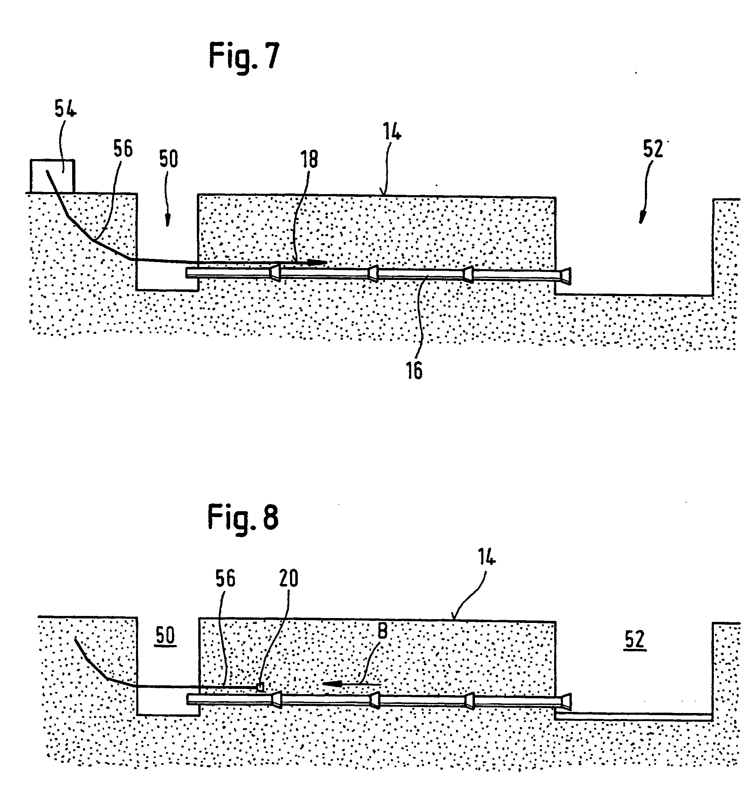

Das Verfahren findet bei der Sanierung von bestehenden Versorgungsleitungen Anwendung. Zwar wird in der schematischen Darstellung der Fig. 7 bis 10 jeweils eine Startgrube- und Zielgrube gezeigt, doch sind diese Begriffe weit zu fassen. Eine Zielgrube kann beispielsweise auch der Kellerraum eines Hauses sein, in dem eine Versorgungsleitung endet und eine Startgrube kann beispielsweise auch durch natürliche Gegebenheiten, beispielsweise einen Hang, ausgebildet sein. Die Start- und Zielgrube besitzt somit lediglich die Bedeutung eines Raumes, der in Verlängerung der axialen Erstreckung der auszuwechselnden Rohrleitung liegt und für die nachfolgend beschriebenen Tätigkeiten zugänglich ist.

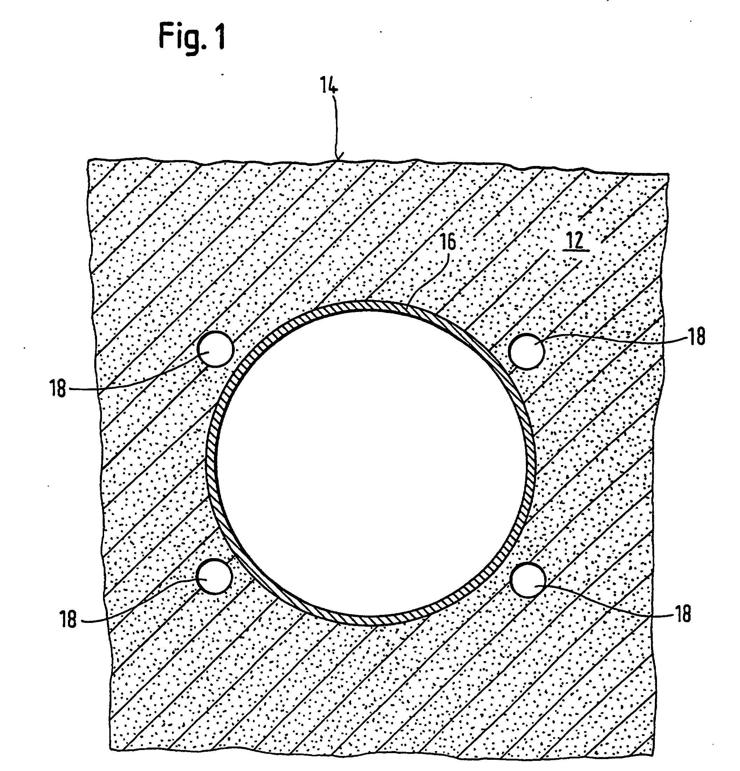

In Fig. 1 ist das Grundprinzip des erfindungsgemäßen Verfahrens schematisch dargestellt. Im Boden 12 unterhalb der Erdoberfläche 14 ist eine Rohrleitung 16 dargestellt, die eine auszuwechselnde Versorgungsleitung 16 darstellt. Die Versorgungsleitung 16 ist vollständig im Erdreich 12 eingebettet und kann, wie im dargestellten Beispiel, eine Rohrleitung, aber auch eine andere Versorgungsleitung, wie beispielsweise ein Elektrokabel, sein. Die Rohrleitung 16 ist aus einzelnen Rohrleitungssegmenten aufgebaut, die üblicherweise mit einer Muffenverbindung und den damit verbundenen, in periodischen Abständen wiederkehrenden Verdickungen des Rohrdurchmessers miteinander verbunden sind. Im Falle eines Elektrokabels können sich ebenfalls in unregelmäßigen und nicht vorhersehbaren Abständen Elektromuffen am Kabel befinden, mit dem beschädigte Stellen ausgebessert oder aber auch einzelne Leitungsabschnitte miteinander verbunden wurden.

Um die Rohrleitung 16 gegen eine andere Rohrleitung auszutauschen, muß diese zunächst aus dem umgebenden Boden entfernt werden, wobei gleichzeitig Sorge getragen werden sollte, daß der nach dem Herausziehen der Rohrleitung 16 entstehende Erdkanal stabil verbleibt und das Einziehen einer anderen Rohrleitung ermöglicht.

Nach dem erfindungsgemäßen Verfahren werden zunächst mehrere Bohrungen entlang der auszutauschenden Rohrleitung 16 vorangetrieben. In Fig. 1 sind hierzu die hierbei gebildeten Bohrungen 18 dargestellt. Die Bohrungen 18 werden mit Hilfe der vollkommen verlaufsgesteuerten Horizontal-Spülbohrtechnik durchgeführt. Hierbei wird nicht in konventioneller Technik, sondern mit dünnen, scharfen, schneidenden Wasserstrahlen gebohrt, die aus Düsen an der Bohrkopfspitze austreten und ein hydromechanisches Lösen von Lockergestein bewirken. Hierdurch kommt es zu einer Gefügeumlagerung des Lockerungsgesteins im Untergrund, wobei eine neue und dichtere Lagerung durch Einsparung von Porenraum im Umgebungsbereich des Elementes bewirkt wird.

Zum Steuern dienen zwei Komponenten. Zum einen hat der Bohrkopf einen eingebauten Sender, der ein elektromagnetisches Feld erzeugt, das mit einem über der Erdoberfläche 14 befindlichen Feldstärkemeßgerät erfaßt werden kann, so daß die Position des Bohrkopfes jederzeit ortbar ist. Zum anderen ist der Bohrkopf selbst asymmetrisch aufgebaut und weist eine schräge Abstützfläche auf, die als Steuerfläche wirksam ist, indem sie beim Kurvenfahren auf der Gegenseite der gewünschten Kurvenrichtung die schräge Abstützung des Bohrkopfes übernimmt. Die Raumlage des Bohrkopfes ist sowohl an dem Laffettenbohrgerät an einem Anzeigegerät als auch am Ortungsgerät nachvollziehbar. Indem ein besonders flexibler Bohrstahl eingesetzt wird, können geringe Kurvenradien mit einem Durchmesser von einigen Metern gebohrt werden. Daher ist es möglich, in einem relativ geringen Abstand dem Außendurchmesser der Rohrleitung 16 zu folgen und gleichzeitig aber auch einer gekrümmten Verlegung der Rohrleitung zu folgen und Hindernissen oder örtlichen Veränderungen des Durchmessers durch Rohrmuffen auszuweichen. Dies ist notwendig, da im Falle von Elektrokabeln, die in unregelmäßigen Abständen anzutreffenden Elektromuffen etwa den doppelten Durchmesser wie das Elektrokabel selbst besitzen.

Die Anzahl der Bohrungen 18 richtet sich nach den örtlichen Gegebenheiten. Bei auszutauschenden Rohrleitungen mit größerem Durchmesser ist erfahrungsgemäß eine höhere Anzahl von Bohrungen notwendig. Allerdings steht die Anzahl der benötigten Bohrungen auch mit der umgebenden Bodengefügestruktur und auch dem verwendeten Spülkopf sowie der verwendeten Spülflüssigkeit sowie des Austrittsdruckes aus den Düsen als Einflußgrößen, welche die Anzahl der benötigten Bohrungen bestimmen, in Zusammenhang. Eine weitere sehr wichtige Einflußgröße ist die Länge des in einem Arbeitsgang zu sanierenden Abschnittes. Je größer die zu sanierende Abschnittslänge ist, desto höher sind die hierbei zu überwindenden Reibungskräfte, so daß auch das Herstellen einer Gleitschicht zwischen der auszutauschenden Leitung und dem umgebenden Boden verbessert werden muß.

Nachdem die verlaufsgesteuerten Spülbohrungen eine Zielgrube erreicht haben, wird der Bohrkopf abgenommen und ein Spülkopf an dem Bohrgestänge befestigt. Anschließend wird das Bohrgestänge entlang der auszutauschenden Leitung 16 zurückgezogen, wobei aus dem Spülkopf während des Rückziehens eine Spülflüssigkeit unter Druck austritt. Die Spülflüssigkeit ist vorzugsweise eine tixotrope Suspension, die eine Gleitschicht um den äußeren Umfang der herauszuziehenden Bohrleitung erzeugt. Hierzu kann beispielsweise Bentonitsuspension unter Zumischung von Additiven (Polysaccharide, Polyacrylate, CMC-Produkte, Biogene und chemisch erzeugte Hochpolymere) eingesetzt werden. Die Spülflüssigkeit tritt aus Düsen am Spülkopf mit Drücken zwischen 9,87 atm (10 bar) und 2.961 atm (3.000 bar) und vorzugsweise zwische 9,87 und 394.77 atm (10 und 400 bar) aus.

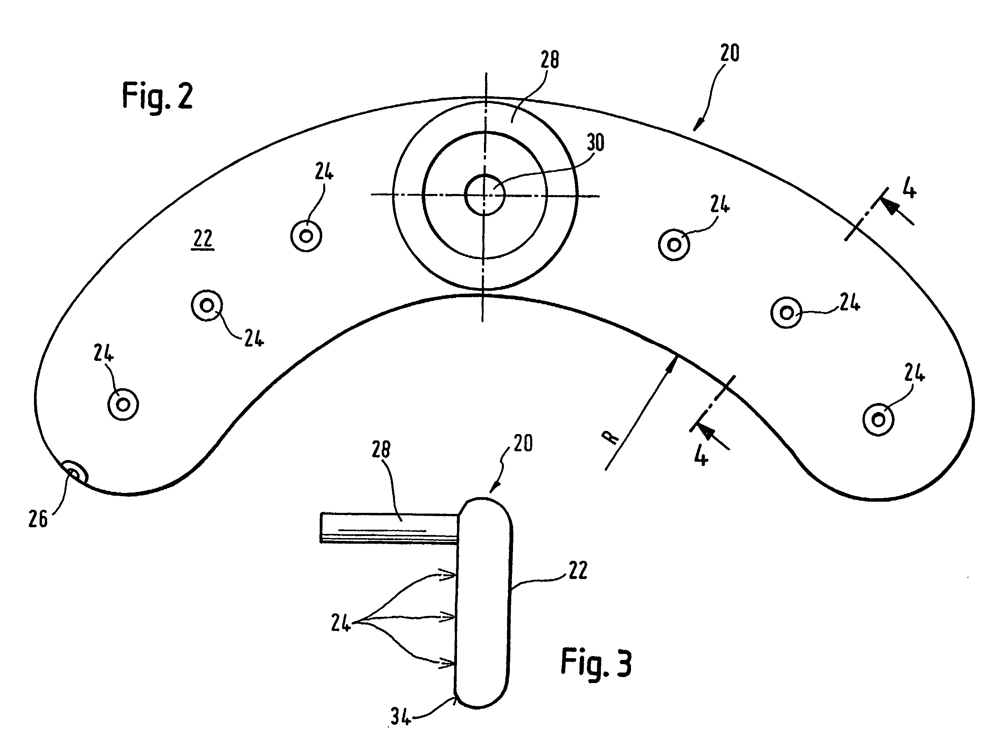

Fig. 2, 3 und 4 zeigen eine erste Ausführungsform eines geeigneten Spülkopfes 20 senkrecht zur Zugrichtung des Bohrgestänges, die sich aus der Ebene der Fig. 2 nach oben erstreckt. Der Spülkopf 20 besteht aus einem kreisringsegmentförmig ausgebildeten Grundkörper 22, in dem Austrittsdüsen 24 gebildet sind, die sich in einen inneren Hohlraum erstrecken, der mit allen Austrittsdüsen 24 in Verbindung steht. Alternativ sind selbstverständlich auch andere Bauvarianten unter Verwendung der in Fig. 2 dargestellten Grundform möglich, beispielsweise auch das Vorsehen einer seitlichen Austrittsdüse 26.

Der Grundkörper 22 des Spülkopfs 20 besitzt einen Innenradius R, der etwas größer ist als der Außenradius der auszuwechselnden Leitung. Auf diese Weise kann der Spülkopf 20 eng an der auszuwechselnden Leitung entlanggeführt werden. Die Düsen 24 dienen dem Austritt einer tixotropen Suspension, welche eine Gleitschicht erzeugt. Aufgrund ihrer Anordnung am Spülkopf 20 dienen diese Düsen jedoch auch gleichzeitig dazu, den Kraftaufwand beim Zurückziehen des Spülkopfes durch das Erdreich zu verringern, indem die vor dem Spülkopf liegende Bodenschicht gelöst wird. Die optional vorzusehenden seitlichen Austrittsdüsen 26 dienen dazu, die Anzahl der um eine auszuwechselnde Leitung herum aufzufahrenden Bohrungen 18 möglichst gering zu halten, indem über die geometrische Erstreckung des Spülkopfes 20 hinweg eine Gleitschicht entlang des Außenumfangs der auszuwechselnden Rohrleitung erzeugt werden kann.

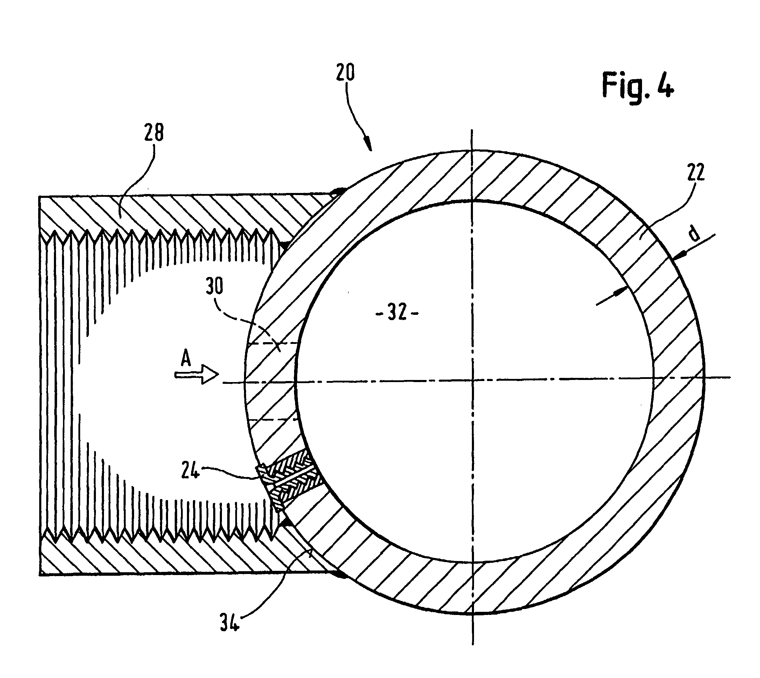

Der Spülkopf 20 ist mit einem Bohrgestängeadapter 28 versehen, der dem festen Anbringen des Spülkopfs 20 an dem Bohrgestänge dient. Hierzu kann der Bohrgestängeadapter 28, wie in Fig. 4 dargestellt ist, ein Gewinde aufweisen, in das das Bohrgestänge mit einem entsprechenden Außengewinde eingeschraubt werden kann. Im Bereich des Bohrgestängeadapters 28 ist eine Eintrittsöffnung 30 im Grundkörper 22 des Spülkopfes ausgebildet, durch die aus dem innen hohlen Bohrgestänge (nicht dargestellt) Spülflüssigkeit in den inneren Hohlraum 32 (siehe Fig. 4) des Grundkörpers 22 in Pfeilrichtung A (Fig. 4) eintreten kann. Wie aus Fig. 4, die einen Schnitt entlang der Linie 4-4 in Fig. 2 darstellt, ersichtlich ist, ist der Grundkörper 22 des Spülkopfes 20 hohl ausgebildet und besitzt eine ausreichende Wandstärke d, um den oben genannten Drücken im Inneren standhalten zu können. Durch das große Volumen im Inneren des Spülkopfes werden gleichmäßige Druckverhältnisse an den verschiedenen Austrittsdüsen 24 sichergestellt. Die Austrittsdüsen 24 können, wie aus Fig. 4 ersichtlich ist, in geeignete Befestigungseinrichtungen, z.B. Gewinde, im Spülkopf 20 angebracht werden, so daß sich unter Verwendung eines einzigen Spülkopfes verschiedene Austrittsdrücke, aber auch Sprühgeometrien realisieren lassen. Schließlich besteht auch die Möglichkeit, eine oder mehrere der Austrittsdüsen unter Verwendung eines geeigneten Blindstopfens stillzulegen.

Wie aus den Fig. 3 und 4 ersichtlich ist, weist der Grundkörper des Spülkopfes eine Geometrie auf, die insbesondere in Zugrichtung des Spülkopfes abgerundete Kanten besitzt. Aufgrund des sehr hohen Innendrucks im Grundkörper 22 ist die aus den Fig. 2 und 4 gezeigte torusartige Form bevorzugt. Wichtig ist allerdings in erster Linie, daß Aufgleitflanken 34 (siehe Fig. 3 und 4) vorgesehen sind, die ein Festfahren des Spülkopfes 20 an einem Hindernis verhindern sollen. Wenn der Spülkopf durch den Boden 12 bewegt wird, so kann er je nach dem Abstand zwischen der Bohrung 18 und den Außenabmessungen der Rohrleitung 16 an Verdickungen der Rohrleitung (z.B. Muffen) festhaken, oder sich im Falle eines Elektrokabels an einer Elektromuffe festhängen. In gleicher Weise ist es selbstverständlich auch möglich, daß sich nahe der Rohrleitung 16 Gesteinsbrocken, oder auch andere Widerstände im Erdreich befinden, denen der Spülkopf ausweichen muß. Hierzu dienen die Aufgleitflanken 34, die dazu da sind, sicherzustellen, daß der Spülkopf unter Zug die Tendenz besitzt, über Widerstände hinwegzugleiten.

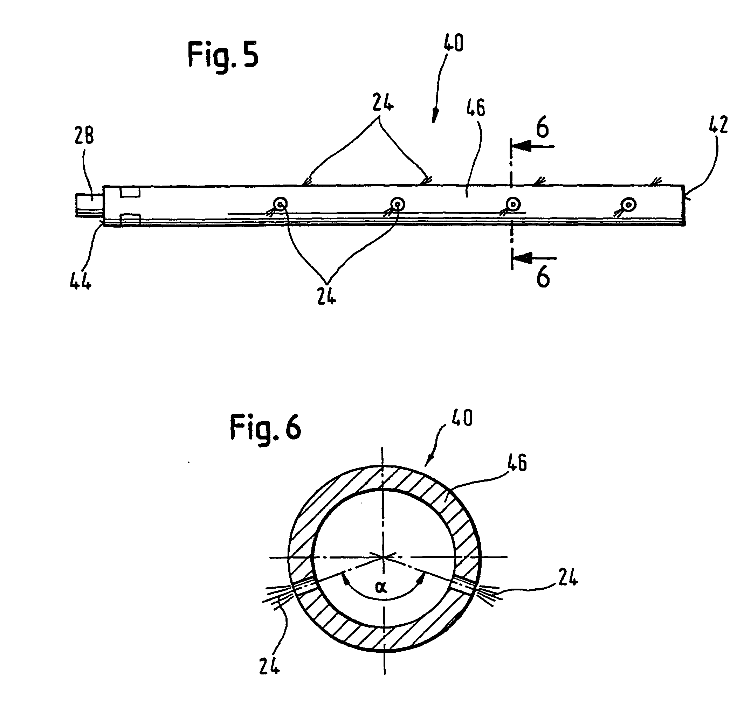

Fig. 5 und 6 zeigen eine unterschiedliche Ausführungsform eines Spülkopfes, der allgemein mit Referenzziffer 40 bezeichnet ist. Der Spülkopf 40 ist als Hohlzylinder ausgebildet mit einer geschlossenen Stirnseite 42 sowie einer zweiten Stirnseite 44, an der sich der Bohrgestängeadapter 28 befindet. Wie auch bei der in den Fig. 2 bis 4 dargestellten Ausführungsform, ist im Bereich des Bohrgestängeadapters eine Eintrittsöffnung in den Hohlraum des zylinderförmigen Grundkörpers 46 vorgesehen, so daß ohne eine Leckage die Spülflüssigkeit durch das Bohrgestänge in den inneren Hohlraum des Spülkopfes 40 gefördert werden kann. Von dort aus tritt die Spülflüssigkeit durch Austrittsdüsen 24 aus, die auf radial gegenüberliegenden Seiten des zylinderförmigen Grundkörpers 46 und in Axialrichtung desselben angeordnet sind, wie aus Fig. 5 ersichtlich ist.

Der Spülkopf ist vor allen Dingen dann bevorzugt einzusetzen, wenn entweder die Gefügestruktur des Bodens das Hindurchziehen eines Spülkopfes entsprechend der Geometrie des ersten Typs (Fig. 2 bis 4) erschwert, oder aber, wenn eine Leitung mit einem sehr großen Durchmesser auszuwechseln ist. Bei Leitungen mit einem sehr großen Durchmesser besitzt der Außenumfang eine relativ geringe Krümmung, so daß das wiederholte Injizieren von Spülflüssigkeit durch mehrere in Längsrichtung des Spülkopfs 40 angeordnete Austrittsdüsen 24 zu einem verbesserten Ergebnis führen kann.

Die Lage der Austrittsdüsen 24 läßt sich in Abhängigkeit von der Geometrie der auszutauschenden Leitung anpassen, indem beispielsweise die Austrittsdüsen 24 nicht diametral zueinander angeordnet sind, sondern wie in Fig. 6 dargestellt angeordnet sind. Wie aus Fig. 6 ersichtlich ist, schließen die Längsachsen der Austrittsdüsen 24 in Blickrichtung der Längsachse des Spülkopfes gesehen, einen Winkel α ein, der geringer als 180° ist. Hierdurch läßt sich die Austrittsrichtung der Spülflüssigkeit der Krümmung einer auszuwechselnden Leitung anpassen. In gleicher Weise kann aber auch der Winkel a bei den verschiedenen in Längsrichtung des Spülkopfes angeordneten Düsenpaaren 24 jeweils variieren.

Das Verfahren zum Auswechseln einer Leitung am Beispiel einer Muffenrohrleitung soll anhand der Abfolge der schematischen Fig. 7 bis 9 dargestellt werden.

Fig. 7 zeigt den ersten Schritt, nämlich das Herstellen der verlaufsgesteuerten Pilotbohrungen. Hierzu wird ausgehend von einer Startgrube 50 hin zu einer Zielgrube 52 eine Pilotbohrung 18 vorangetrieben, wie schematisch durch den Pfeil in Fig. 7 dargestellt ist. Die Pilotbohrung 18 wird in unmittelbarer Nähe zur auszuwechselnden Rohrleitung 16 durchgeführt. Wie in Fig. 7 dargestellt ist, können die Bohrungen 18 auch von der Erdoberfläche 14 aus durchgeführt werden, indem diese von einem schematisch dargestellten Laffettenbohrgerät 54 in den Boden eintreten, durch die Startgrube 50 hindurchgeführt und anschließend entlang der auszuwechselnden Rohrleitung 16 bis zur Zielgrube 52 geführt werden.

Nachdem der Bohrkopf die Zielgrube 52 erreicht hat, wird der Bohrkopf abgenommen und durch einen Spülkopf ersetzt. Anschließend wird das Bohrgestänge 56 mit dem daran befestigten Spülkopf 20 (oder 40) in Pfeilrichtung B zur Startgrube 50 zurückgezogen, bis der Spülkopf 20 (bzw. 40) die Startgrube 50 erreicht. Anschließend kann eine weitere Pilotbohrung 18 entlang der auszuwechselnden Leitung zur Zielgrube 52 vorgetrieben werden und wieder der Spülbohrkopf zur Startgrube zurückgezogen werden. Dieser Vorgang wird so oft wie nötig wiederholt. Die Anzahl der benötigten Durchgänge stellt einen Erfahrungswert dar. Generell ist jedoch anzumerken, daß eine zu hohe Anzahl von Pilotbohrungen und anschließenden Spülvorgängen für den Erfolg des Verfahrens völlig unschädlich ist und auch im Falle, daß sich die zu entfernende Leitung aufgrund einer noch zu hohen Reibung nicht aus dem umgebenden Boden entfernen läßt, auch nachträglich noch weitere Bohrungen vorgenommen werden können.

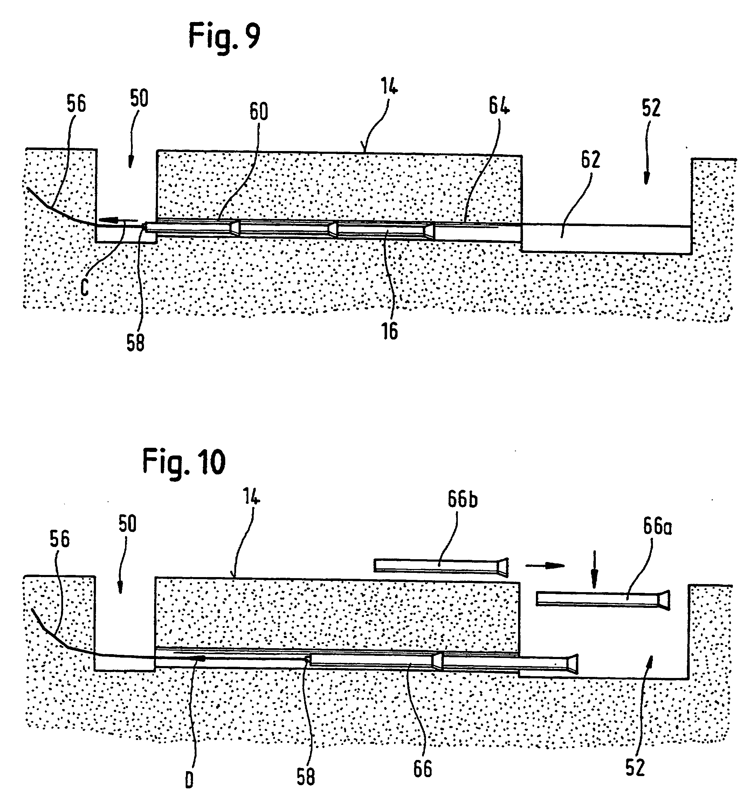

Nachdem in den Abschnitt zwischen der Startgrube 50 und Zielgrube 52 segmentweise eine Gleitschicht aus einer tixotropen Suspension eingebracht wurde, wird, wie in Fig. 9 dargestellt ist, das Bohrgestänge 56 an der auszuwechselnden Leitung befestigt, wie durch Ziff. 58 angedeutet ist. Das Befestigen eines Bohrgestänges an einer Leitung stellt eine fachübliche Maßnahme dar.

Wie in Fig. 9 angedeutet ist, ist der Ringraum 60 um die auszuziehende Leitung 16 mit Hilfe der Spülköpfe freigespült worden und somit mit tixotroper Suspension gefüllt. Daher kann die gesamte Leitung in Richtung der Startgrube 50 herausgezogen werden. Da die Startgrube 50 keine ausreichenden Abmessungen besitzt, um jeweils ein gesamtes Rohrleitungssegment aufzunehmen, muß dieses nach dem Zurückziehen in Pfeilrichtung C zerstört und die Teile nach oben aus der Startgrube 50 entnommen werden, bevor das Bohrgestänge 56 erneut an der auszuwechselnden Leitung 16 befestigt wird. Während dieses Vorganges ist die Startgrube 52 vorzugsweise mit einer ausgewählten Suspension gefüllt, vorzugsweise Bentonitsuspension, die in den nach dem Herausziehen des Rohrs zurückbleibenden Erdkanal 64 gefüllt wird und dazu dient, die Wandung des Erdkanals zu stabilisieren.

Wenn die auszuwechselnde Leitung 16 über der gesamten Abschnittslänge zwischen Startgrube und Zielgrube herausgezogen und aus der Startöffnung entnommen wurde (mit oder ohne Zerstörung der auszuwechselnden Leitung) so liegt ein Erdkanal 64 über der gesamten Abschnittslänge vor, der mit einer stabilisierenden Suspension gefüllt ist. Anschließend kann entweder direkt eine neue Leitung 66 (siehe Fig. 10) eingezogen werden, oder aber es wird zunächst der Erdkanal 64 aufgeweitet. Hierzu wird entweder bereits während des in Fig. 9 dargestellten Arbeitsschrittes ein Bohrgestänge durch den Erdkanal 64 von der Zielgrube zur Startgrube durchgeführt, oder aber erst in einem nachgeschalteten Arbeitsschritt wieder ein Bohrgestänge von der Start- zur Zielgrube bewegt. Die zweite Variante ist trotz des zusätzlichen Arbeitsschrittes bevorzugt, da die Position des Laffettenbohrgerätes nicht verändert zu werden braucht. Nachdem diese weitere Bohrung die Zielgrube 52 erreicht hat, wird die Spülbohrlanze abgenommen und durch einen Aufweitkopf ersetzt, der in Form eines Kegels ausgebildet sein kann und beim Zurückziehen durch den Erdkanal von der Zielgrube zur Startgrube zurück den Erdkanal auf einen gewünschten größeren Durchmesser aufweitet.

In Fig. 10 ist der abschließende Schritt des Einziehens einer neuen Leitung dargestellt. Hierzu wird wieder eine Bohrung von der Startgrube 50 zur Zielgrube 52 vorangetrieben und über die Verbindung 58 wieder mit der neuen einzuziehenden Leitung 66 verbunden. Während des Zurückziehens des Bohrgestänges in Pfeilrichtung D von der Zielgrube 52 zur Startgrube 50 werden abschnittsweise die Rohrstücke 66a, 66b in die Zielgrube herabgelassen und jeweils an den bereits in den Erdkanal eingezogenen Leitungsabschnitt angesetzt.

Mit dem Einziehen der neuen Leitung 66 wird gleichzeitig Bentonit zugegeben, um den Ringraum um die neue Rohleitung zu verdämmen. Wenn das Bohrgestänge 56 mit der Befestigung 58 die Startgrube 50 erreicht hat, ist die neue Leitung eingezogen und der nächste Abschnitt kann durch das Erstellen einer neuen Grube begonnen werden. Hierbei kann die umgekehrte Richtung gewählt werden, so daß es möglich ist, bei einem aus vielen einzelnen Einziehabschnitten bestehenden Projekt jeweils nur jede zweite Grube mit einer entsprechenden Größe auzustatten, um die Länge eines einzelnen Rohrleitungssegments 66a, 66b aufnehmen zu können. Wie aus den Fig. 7 bis 9 ersichtlich ist, besitzt die Startgrube 50 eine geringere seitliche Erstreckung als die Zielgrube 52. Wenn nun das Verfahren an einem weiteren Abschnitt fortgesetzt werden soll, der sich in der Zeichenebene der Fig. 7 bis 10 links anschließt, so muß die bestehende Startgrube 50 nicht erweitert werden, sondern nur die nicht in den Figuren dargestellte, nachfolgend zu erstellende Zielgrube 52 wieder eine ausreichende Größe besitzen, um das Einsetzen der einzelnen Rohrleitungssegmente 66a, 66b zu gestatten. Das oben beschriebene Verfahren würde in derselben Weise ablaufen, außer, daß die Austauschrichtung und somit die Richtung sämtlicher Bewegungsabläufe umgedreht wird und die Orientierung der Rohrelemente unverändert belassen wird.

## Patentansprüche

1. Verfahren zum grabenlosen Leitungsaustausch umfassend für jede zu sanierende Abschnittslänge die Schritte:
(a) Vorantreiben mehrerer verlaufsgesteuerter Bohrungen (18) entlang und nahe des Umfangs der auszutauschenden Leitung (16) bis zu einer Zielgrube (52);
(b) drehstarres Anbringen eines Spülkopfes (20; 40) an einem Bohrgestänge (56) in der Zielgrube (52);
(c) Zurückziehen des Spülkopfes (20; 40) unter gleichzeitigem Austritt von Spülflüssigkeit bis zu einer Startgrube (50);
(d) Herausziehen der auszutauschenden Leitungen (16) aus dem Erdkanal (64);
(e) Füllen des Erdkanals (64) mit einem Stabilisiermittel; und
(f) Einziehen einer neuen Leitung (66).

2. Verfahren nach Anspruch (1), weiter umfassend während des Schritts (f):
- Verfüllen des Ringraumes zwischen der neuen Leitung (66) und dem Erdkanal (64) mit Verdämmmittel.

3. Verfahren nach Anspruch (1) oder Anspruch (2), weiter umfassend nach dem Schritt (d):
- Erweiterung des Erdkanals (64) durch das Ziehen einer Aufweiteinrichtung durch den Erdkanal.

4. Verfahren nach einem der Ansprüche 1 bis 3,
**dadurch gekennzeichnet, daß**
das Zurückziehen der auszutauschenden Leitung (16) unter Nutzung der Zugeinrichtung des Horizontal-Spülbohrgeräts (54) erfolgt.

5. Verfahren nach einem der vorhergehenden Ansprüche,
**dadurch gekennzeichnet daß**,
das Stabilisiermittel tixotrope Eigenschaften besitzt, vorzugsweise Bentonitsuspension ist.

6. Verfahren nach einem der vorhergehenden Ansprüche,
**dadurch gekennzeichnet daß**,
die Spülflüssigkeit Bentonitsuspension, vorzugsweise unter Zumischung von Additiven, ist.

7. Verfahren nach einem der vorhergehenden Ansprüche,
**dadurch gekennzeichnet daß**,
die Spülflüssigkeit mit einem Druck zwischen 10.10⁵ Pa (10 bar) und 3.000.10⁵ Pa(3.000 bar) aus Austrittsdüsen (24) im Spülkopf (20; 40) austritt.

## Claims

1. Method for trenchless pipe exchange including for each section length to be refurbished the steps of:
(a) driving forwards several controlled-path bores (18) along and close to the circumference of the pipe (16) to be exchanged as far as a destination pit (52);
(b) in torsion-resistant fashion attaching a flushing head (20; 40) to a pipe string (56) in the destination pit (52);
(c) retracting the flushing head (20; 40) at the same time as exit of flushing liquid as far as a starting pit (50);
(d) pulling the pipes (16) to be exchanged out of the earth channel (64);
(e) filling the earth channel (64) with a stabilising medium; and
(f) pulling in a new pipe (66).

2. Method according to claim (1), further including during step (f):
- filling the annular space between the new pipe (66) and the earth channel (64) with damming material.

3. Method according to claim (1) or claim (2), further including after step (d):
- widening the earth channel (64) by pulling an expanding device through the earth channel.

4. Method according to any of claims 1 to 3, **characterised in that** retraction of the pipe (16) to be exchanged takes place using the pulling device for the horizontal flush-drilling device (54).

5. Method according to any of the preceding claims, **characterised in that** the stabilising medium has thixotropic properties, is preferably bentonite suspension.

6. Method according to any of the preceding claims, **characterised in that** the flushing liquid is bentonite suspension, preferably with the addition of additives.

7. Method according to any of the preceding claims, **characterised in that** the flushing liquid exits at a pressure of between 10·10⁵Pa (10 bars) and 3000·10⁵ Pa (3,000 bars) from outlet nozzles (24) in the flushing head (20; 40).

## Revendications

1. Procédé de remplacement de conduites sans excavation comprenant, pour chaque longueur de section devant être rénovée, les étapes consistant à:
(a) creuser plusieurs perçages (18) ayant une allure réglée le long et à proximité de la périphérie de la canalisation à remplacer (16) jusqu'à une fosse d'arrivée (52);
(b) monter, d'une manière bloquée en rotation, une tête de balayage (20; 40) sur une tige de forage (56) dans la fosse d'arrivée (52);
(c) rétracter la tête de balayage (20; 40) tout en extrayant simultanément le liquide de balayage jusqu'à une fosse de départ (50);
(d) extraire les canalisations à remplacer (16) hors du canal (64) formé dans le sol;
(e) remplir le canal (64) formé dans le sol avec un agent de stabilisation; et
(f) insérer une nouvelle conduite (66).

2. Procédé selon la revendication 1, comportant en outre; lors de l'étape (f):
- un remplissage de l'espace annulaire entre la nouvelle conduite (66) et le canal (64) formé dans le sol par un milieu de bourrage.

3. Procédé selon la revendication (1) ou la revendication (2) comprenant en outre après l'étape (d):
- l'élargissement du canal (54) formé dans le sol par tirage d'un dispositif d'élargissement à travers le canal formé dans le sol.

4. Procédé selon l'une des revendications 1 à 3, **caractérisé en ce que** le retrait de la canalisation devant être remplacée (16) s'effectue moyennant l'utilisation du dispositif de traction de l'appareil de perçage horizontal avec balayage (54).

5. Procédé selon l'une des revendications précédentes, **caractérisé en ce que** l'agent de stabilisation possède des propriétés thixotropes et de préférence est une suspension de bentonite.

6. Procédé selon l'une des revendications précédentes, **caractérisé en ce que** le liquide de balayage est une suspension de bentonite, de préférence à laquelle sont mélangés des additifs.

7. Procédé selon l'une des revendications précédentes, **caractérisé en ce que** le liquide de balayage sort avec une pression comprise entre 10.10⁵ Pa (10 bars) et 3000.10⁵ Pa (3000 bars) de buses de sortie (24) situées dans la tête de balayage (20; 40).
